# EUROPÄISCHE PATENTSCHRIFT

(11) **EP 1 733 199 B1**
(45) Veröffentlichungstag und Bekanntmachung des Hinweises auf die Patenterteilung: **09.03.2011**
(21) Anmeldenummer: 05717135.7
(22) Anmeldetag: 23.03.2005
(51) Int. Cl.: G01L 19/06, G01L 13/02

(54) **DIFFERENZDRUCKAUFNEHMER MIT DYNAMISCHEM ÜBERLASTSCHUTZ**
DIFFERENTIAL PRESSURE GAUGE WITH DYNAMIC OVERLOAD PROTECTION
MANOMETRE DIFFERENTIEL A PROTECTION DYNAMIQUE CONTRE LA SURCHARGE

(30) Priorität: 07.04.2004 DE 102004017580
(43) Veröffentlichungstag der Anmeldung: 20.12.2006
(73) Patentinhaber: Endress+Hauser GmbH+Co. KG, 79689 Maulburg (DE)
(72) Erfinder: BURCZYK, Dietfried, 14513 Teltow (DE); DANNHAUER, Wolfgang, 14513 Teltow (DE)
(74) Vertreter: Andres, Angelika Maria
(86) Internationale Anmeldenummer: PCT/EP2005/051343
(87) Internationale Veröffentlichungsnummer: WO 2005/098387

(56) Entgegenhaltungen:
- US-A- 4 072 058
- US-A- 4 285 244
- US-A- 4 329 877
- US-A- 4 776 218

## Beschreibung

Die vorliegende Erfindung betrifft Differenzdruckaufnehmer mit hydraulischer Druckübertragung zu einem Messelement mittels einer Übertragungsflüssigkeit, insbesondere solche Differenzdruckaufnehmer mit einer Überlastmembran. Ein derartiger Differenzdruckaufnehmer ist beispielsweise in der Offenlegungsschrift DE 196 08 321 A1 offenbart. Differenzdruckaufnehmer weisen einen Hydraulikkörper auf, in dem eine Überlastkammer mit einer Überlastmembran ausgebildet ist, welche die Überlastkammer in eine Hochdruckhalbkammer und in eine Niederdruckhalbkammer teilt, wobei die Hochdruckhalbkammer mit einem ersten hydraulischen Pfad kommuniziert, der sich zwischen einem ersten Druckmittler mit einer Trennmembran über einem Membranbett und der Hochdruckseite einer Druckmesszelle erstreckt, und die Niederdruckhalbkammer mit einem zweiten hydraulischen Pfad kommuniziert, der sich zwischen einem zweiten Druckmittler mit einer Trennmembran über einem Membranbett und der Niederdruckseite dem Messelement erstreckt.

Bei großen Überlasten wird die Übertragungsflüssigkeit vollständig aus dem Druckmittler herausgedrückt, und die Trennmembran liegt an dem Membranbett an. Die bei Überlastdruck in den betreffenden hydraulischen Pfad verschobene Übertragungsflüssigkeit führt zu einer Auslenkung der Überlastmembran, um das zusätzliche Volumen aufzunehmen und den Überlastdruck abzubauen.

Je steifer die Überlastmembran ist, desto schneller reagiert die Messzelle auf Druckschwankungen. Das ist besonders bedeutend bei Sensoren mit Druckmittleranbauten, die über eine lange Kapillarleitung mit dem Sensor verbunden sind. Die lange Kapillarleitung hat einen großen hydraulischen Widerstand und bildet mit der Überlastmembran ein RC-Glied, wobei eine weiche Überlastmembran mit einer großen hydraulischen Kapazität C zu großen Zeitkonstanten bzw. langen Ansprechzeiten führen kann. Prinzipiell bildet jedoch auch bereits ein kurzer hydraulischer Messpfad, der einen ggf. sogar in einen Hydraulikkörper integrierten Druckmittler mit einer Druckmesszelle koppelt, gemeinsam mit einer Überlastmembran ein RC-Glied, welches die Dynamik der Messung beeinträchtigen kann.

Die gängigen Überlastmembranen weisen in erster Näherung eine konstante Kapazität bzw. lineare Kennlinie auf. D.h. die Volumenaufnahme dV ist proportional zur Druckänderung dP. Auf diese Weise wird bereits im Messbereich die Dynamik des Differenzdruckaufnehmers durch die Überlastmembran beeinträchtigt. Es ist daher die Aufgabe der Erfindung, einen Differenzdruckaufnehmer bereitzustellen, der die beschriebenen Nachteile überwindet.

Die Aufgabe wird erfindungsgemäß gelöst durch den Differenzdruckaufnehmer gemäß des unabhängigen Patentanspruchs 1.

Der erfindungsgemäße Differenzdruckaufnehmer, umfasst:

einen Hydraulikkörper, in dem eine Überlastkammer mit einer Überlastmembran ausgebildet ist, welche die Überlastkammer in eine erste Halbkammer und in eine zweite Halbkammer teilt, wobei

die erste Halbkammer mit einem ersten hydraulischen Messpfad kommuniziert, der sich zwischen einem ersten Druckmittler mit einer ersten Trennmembran und einer ersten Seite einer Differenzdruckmesszelle erstreckt, und die zweite Halbkammer mit einem zweiten hydraulischen Pfad kommuniziert, der sich zwischen einem zweiten Druckmittler und der einer zweiten Seite der Druckmesszelle erstreckt, wobei ferner

zwischen mindestens der ersten Halbkammer und dem ersten hydraulischen Messpfad ein erstes hydraulisches Überlastelement mit einem Schnappscheibenverhalten gegen einen Überdruck auf der Seite des ersten hydraulischen Messpfads und ein parallel dazu geführter erster hydraulischer Ausgleichspfad angeordnet ist.

Das Schnappscheibenverhalten bezeichnet ein Verhalten, bei dem bis zu einem bestimmten Grenzwert eines Überdrucks von der Seite des ersten hydraulischen Messpfades nur eine vernachlässigbar kleine Auslenkung des Überlastelements erfolgt, und bei dem bei Überschreiten des Grenzwertes eine große Auslenkung des Überlastelements erfolgt, indem es durchschnappt. Der Grenzwert liegt vorzugsweise außerhalb des Messbereichs der Differenzdruckaufnehmers.

Das Überlastelement bewirkt, dass die Dynamik des hydraulischen Messpfades im Messbereich kaum beeinträchtigt wird, da Auslenkungen des Überlastelementes weitgehend vermieden werden. Wenn sich dagegen eine Differenzdrucküberlast schnell aufbaut, dann wird der Grenzwert für das Schnappen des Überlastelements erreicht, worauf die erforderliche Volumenverschiebung der Übertragungsflüssigkeit stattfinden kann, um die erste Trennmembran zur Anlage zu bringen und einen weiteren Druckanstieg zu verhindern.

Zur Realisierung dieses Schnappscheibenverhaltens weist das erste hydraulische Überlastelement eine erste zumindest abschnittsweise gewölbte Membran auf.

Das erste Überlastelement des Differenzdruckaufnehmers sollte eine Auslenkung der Überlastmembran bei Überdruck von der Seite des zweiten hydraulischen Messpfades möglichst wenig behindern. Insoweit weist das erste hydraulische Überlastelement, gegen Überdruck aus Richtung der ersten Überlastkammer eine hydraulische Kapazität auf, die mindestens das einfache der hydraulischen Kapazität der Überlastmembran, vorzugsweise mindestens das zweifache, weiter bevorzugt mindestens das vierfache der hydraulischen Kapazität der Überlastmembran in der Ruhelage beträgt. Demnach kann das erste hydraulische Überlastelement das bei einer Auslenkung der Überlastmembran in Richtung des ersten hydraulischen Überlastelementes verschobene Volumen der Übertragungsflüssigkeit ohne erblichen Druckanstieg aufnehmen.

Zu diesem Zweck kann das erste hydraulische Überlastelement eine in der Ruhelage zumindest abschnittsweise gegen Überdruck von der Seite des ersten hydraulischen Messpfads abgestützte Membran aufweisen.

In einer ersten Ausgestaltung des Differenzdruckanfnehmers gemäß dieses Gesichtspunkts der Erfindung weist die erste zumindest abschnittsweise gewölbte Membran einen zentralen gewölbten Abschnitt auf, welcher von einem ringförmigen Abschnitt umgeben ist, der in der Ruhelage gegen Überdruck von der Seite des ersten hydraulischen Messpfads abgestützt ist

In einer zweiten Ausgestaltung sind die beiden Membranen entkoppelt, d.h., das erste hydraulische Überlastelement umfasst neben einer ersten zumindest abschnittsweise gewölbten Membran beispielsweise eine erste ringförmige Membran, welche die erste zumindest abschnittsweise gewölbte Membran umgibt, wobei die erste Ringmembran in der Ruhelage gegen Überdruck von der Seite des ersten hydraulischen Messpfads abgestützt ist.

In einer Abwandlung der zweiten Ausgestaltung des Diferenzdruckaufnehmers gemäß dieses Gesichtspunkts der Erfindung ist parallel zu der ersten zumindest abschnittsweise gewölbte Membran einen zweite Membran angeordnet, welche in ihrer Ruhelage gegen Überdruck von der Seite des ersten hydraulischen Messpfads abgestützt ist

Der erste hydraulische Ausgleichspfad dient dazu, der temperaturabhängigen Volumenschwankung der Übertragungsflüssigkeit gerecht zu werden. Das eingeschlossene Volumen zwischen der Überlastmembran und dem ersten hydraulischen Überlastelement bleibt daher im wesentlichen unabhängig von der Temperatur der Übertragungsflüssigkeit, und temperaturabhängige Auslenkungen des Überlastelementes werden vermieden. Dies ist insoweit vorteilhaft, als eine temperaturabhängige Auslenkung des Überlastelementes bei einer Erwärmung des Überlastelementes das Schnappscheibenverhalten des Übelastelementes unterlaufen würde.

Erfindungsgemäß der hydraulische Widerstand des ersten hydraulischen Ausgleichspfades größer als der Widerstand des ersten hydraulischen Messpfades. Dies bewirkt insbesondere dass bei schnellen Differenzdruckschwankungen, im Messbereich des Differenzdruckaufnehmers die Dynamik des ersten hydraulischen Messpfads durch den ersten hydraulischen Ausgleichspfad kaum beeinträchtigt wird.

Der erste hydraulische Ausgleichspfad kann beispielsweise einen Durchlass in einer Membran, beispielsweise der ersten gewölbten Membran, oder einen Kanal im Hydraulikkörper umfassen, wobei letzterer an der ersten gewölbten Membran vorbei geführt ist.

Es ist zweckmäßig, wenn ebenfalls zwischen dem zweiten Druckmittler und der zweiten Überlastkammer ein zweites hydraulisches Überlastelement angeordnet ist. Die Ausführungen für das erste hydraulische Überlastetement gelten sinngemäß für das zweite hydraulische Überlastelement.

Weitere Einzelheiten der Erfindung ergeben sich aus dem in der Zeichnung dargestellten Ansführungsbeispiel.

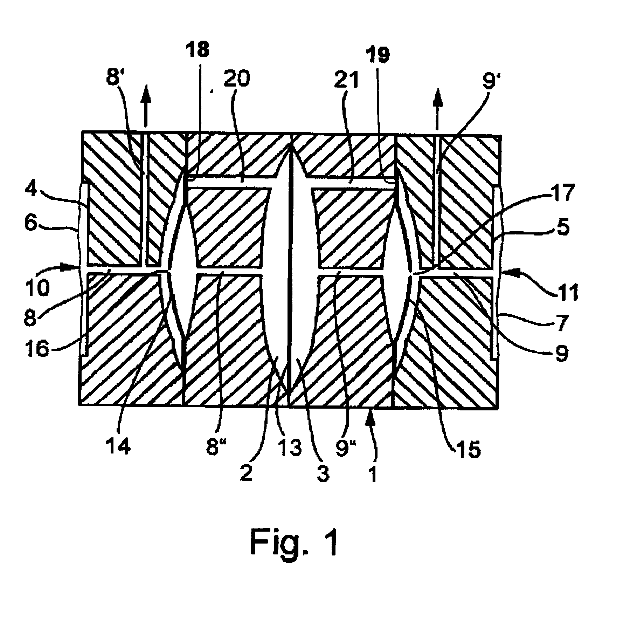

Fig. 1. eine Schnittzeichnung durch einen erfindungsgemäßen

Differenzdruckaufnehmer.

Der in Fig. 1 gezeigte Diffetenzdruckaufnehmer umfasst einen im wesentlichen zylindrischen Hydraulikkörper 1, welcher an seinen Stirnflächen ein Membranbett 4, 5 aufweist, über dem eine Trennmembran 10, 11 befestigt ist. Zwischen den Trennmembranen und den Membranbetten ist jeweils eine Druckmittlerkammers ausgebildet, von der sich jeweils ein hydraulischer Messpfad 8, 8', 9, 9' in das Innere des Hydraulikkörpers 1 und zu einer bier nicht dargestellten Messzelle erstreckt. Die Messzelle kann, wie in der Zeichnung angedeutet, außerhalb des Hydraulikkörpers angeordnet oder an geeigneter Stelle im Hydraulikkörper positioniert sein. Die hydraulischen Messpfade sind dabei jeweils über einen ersten bzw. zweiten Überlastkanal 8", 9" mit einer ersten bzw. zweiten Überlasthalbkammer 2, 3 hydraulisch gekoppelt, wobei zwischen der ersten und der zweiten Überlasthalbkammer eine Überlastmembran 13 angeordnet ist.

Zwischen den hydraulischen Messpfaden 8, 9 und den Überlasthalbkammern 2, 3 ist jeweils ein Überlastelement mit Schnappscheibenverhalten angeordnet.

Die Überlastelemente umfassen jeweils eine gewölbte Membran 14, 15, und eine Ringmembran 18, 19.

Die Ringmembranen sind an ihrem inneren Rand und ihrem äußeren Rand am Hydraulikkörper fixiert, und sie kommunizieren jeweils über einen Entlastungskanal 20, 21 mit einer der Überlastkammern 2, 3. Die Ringmembranen 18,19 sind einerseits weich und andererseits in der Ruhelage gegen Überdruck von der Seite des jeweiligen Messpfades durch ein Membranbett abgestützt. D.h. sie haben an sich eine große hydraulische Kapazität, die aber wegen der Abstutzung nur für Überdruck von der Seite der jeweiligen Überlastkammer bereitsteht, und im Ergebnis eine hydraulische Kapazität von null gegen Überdruck von der Seite des jeweiligen Messpfades.

Die gewölbten Membranen 14,15 weisen ein Schnappscheibenverhalten auf und sind so abgestimmt, dass sie bis zu einem Grenzwert des Überdrucks von der Seite des jeweiligen Messpfades eine vernachlässighar geringe hydraulische Kapazität aufweisen und bei Überschreiten des Grenzwertes durchschnappen, was einer sehr großen Kapazität entspricht. Das Durchschnappen bewirkt, dass sämtliches Öl aus der jeweiligen Druckmittlerkammer verdrängt werden kann und damit ein weiterer Druckanstieg verhindert wird. Das Durchschnappen der gewölbten Membran (14, 15) geht zudem mit einer Volumenverschiebung der Übertragungsflüssigkeit in die jeweilige Überlastkammer und einer Auslenkung der Überlastmembran 13 einher. Infolgedessen wird aus der anderen Überlastkammer Übertragungsflüssigkeit in Richtung des anderen Überlastelementes verschoben. Diese Übertragungsflüssigkeit wird durch den Entlastungskanal 20, 21 unter die weiche Ringmembran 18, 19 verschoben.

Die Membranbetten der gewölbten Membranen 14,15 sind vorzugsweise jeweils so geformt, dass die gewölbten Membranen im Überlastfall nicht vollständig durch schnappen, sondern von dem Membranbett in einer solchen Lage abgestützt werden, dass sie nach Wegfall der Überlast alsbald von alleine ausschnappen können, um eine Fortsetzung der Messung zu ermöglichen.

Die gewölbten Membranen 14, 15, weisen zudem jeweils einen kleinen Durchlass 16, 17, auf, welcher einen Volumenausgleich bei Temperaturschwankungen der Übertragungsflüssigkeit ermöglicht. Der Durchlass 16, 17 weist jeweils einen erheblich größeren hydraulischen Widerstand als der Messpfad auf, so dass die Dynamik des jeweiligen Messpfades durch den Durchlass kaum beeinträchtigt wird.

Die Messzelle kann jede geeignete Differenzdruckmesszelle sein, die dem Fachmann geläufig ist. Auf den Typ der Messzelle kommt es im Zusammenhang mit der vorliegenden Erfindung nicht an.

## Patentansprüche

1. Differenzdruckaufnehmer, umfassend:
einen Hydraulikkörper (1), in dem eine Überlastkammer mit einer Überlastmembran (13) ausgebildet ist, welche die Überlastkammer in eine erste Halbkammer (2) und in eine zweite Halbkammer (3) teilt, wobei
die erste Halbkammer (2) mit einem ersten hydraulischen Messpfad (8, 8') kommuniziert, der sich zwischen einem ersten Druckmittler und einer ersten Seite einer Differenzdruckmesszelle erstreckt, und die zweite Halbkammer (2) mit einem zweiten hydraulischen Pfad (9, 9') kommuniziert, der sich zwischen einem zweiten Druckmittler und einer zweiten Seite der Druckmesszelle erstreckt, **dadurch gekennzeichnet, dass**
zwischen mindestens der ersten Halbkammer (2) und dem ersten hydraulischen Messpfad ein erstes hydraulisches Überlastelement (14) mit einem Schnappscheibenverhalten gegen einen Überdruck auf der Seite des ersten hydraulischen Messpfads (8,8') und ein parallel dazu geführter erster hydraulischer Ausgleichspfad (16) angeordnet ist,
wobei der hydraulische Widerstand des ersten hydraulischen Ausgleichspfades (16) größer ist als der Widerstand des ersten hydraulischen Messpfades (8, 8') .

2. Differenzdruckaufnehmer nach Anspruch 1, wobei das hydraulische Überlastelement (14) eine erste zumindest abschnittsweise gewölbte Membran umfasst.

3. Differenzdruckaufnehmer nach Anspruch 2, wobei der erste hydraulische Ausgleichspfad (16) einen Durchlass in einer Membran umfasst.

4. Differenzdruckaufnehmer nach Anspruch 2, wobei der erste hydraulische Ausgleichspfad (16) einen Kanal im Hydraulikkörper (1) umfasst.

5. Differenzdruckaufnehmer nach einem der vorhergehenden Ansprüche, wobei das erste hydraulische Überlastelement (14), gegen Überdruck aus Richtung der ersten Überlastkammer eine hydraulische Kapazität aufweist, die mindestens so groß ist, wie die hydraulische Kapazität der Überlastmembran und vorzugsweise mindestens das doppelte weiter bevorzugt mindestens das vierfache der hydraulischen Kapazität der Überlastmembran in der Ruhelage beträgt.

6. Differenzdruckaufnehmer nach einem der vorhergehenden Ansprüche, wobei das erste hydraulische Überlastelement (14) eine in der Ruhelage zumindest abschnittsweise gegen Überdruck von der Seite des ersten hydraulischen Messpfads abgestützte Membran umfasst.

7. Differenzdruckaufnehmer nach Anspruch 2 und Anspruch 6 oder einem davon abhängigen Anspruch, wobei das erste hydraulische Überlastelement neben einer ersten zumindest abschnittsweise gewölbten Membran (14) eine erste ringförmige Membran (18) umfasst, welche die erste zumindest abschnittsweise gewölbte Membran umgibt, wobei die erste Ringmembran (18) in der Ruhelage gegen Überdruck von der Seite des ersten hydraulischen Messpfads (8, 8') abgestützt ist.

8. Differenzdruckaufnehmer nach Anspruch 2 und Anspruch 6 oder einem davon abhängigen Anspruch, wobei parallel zu einer ersten zumindest abschnittsweise gewölbten Membran (14) eine zweite Membran angeordnet ist, welche in ihrer Ruhelage gegen Überdruck von der Seite des ersten hydraulischen Messpfads abgestützt ist.

9. Differenzdruckaufnehmer nach einem der vorhergehenden Ansprüche, wobei außerdem zwischen der zweiten Halbkammer (3) und dem zweiten hydraulischen Messpfad (9, 9')ein zweites hydraulisches Überlastelement (15) mit einem Schnappscheibenverhalten gegen einen Überdruck auf der Seite des zweiten hydraulischen Messpfads (9, 9') und ein parallel dazu geführter zweiter hydraulischer Ausgleichspfad (17) angeordnet ist.

## Claims

1. Differential pressure sensor, comprising:
a hydraulic body (1) in which an overload chamber with an overload membrane (13) is formed, said membrane dividing the overload chamber into a first semi-chamber (2) and a second semi-chamber (3), where
the first semi-chamber (2) communicates with a first hydraulic measuring path (8, 8') which extends between a first diaphragm seal and a first side of a differential pressure measuring cell, and the second semi-chamber (2) communicates with a second hydraulic path (9, 9') which extends between a second diaphragm seal and a second side of a differential pressure measuring cell, **characterized in that**
a first hydraulic overload element (14) is arranged between at least the first semi-chamber (2) and the first hydraulic measuring path with a snap-dome behavior against an overpressure on the side of the first hydraulic measuring path (8,8') and a first hydraulic equalization path (16) running parallel to it
where the hydraulic resistance of the first hydraulic equalization path (16) is greater than the resistance of the first hydraulic measuring path (8, 8').

2. Differential pressure sensor as per Claim 1, where the hydraulic overload element (14) comprises a first membrane which is at least partially curved.

3. Differential pressure sensor as per Claim 2, where the first hydraulic equalization path (16) comprises a passage in a membrane.

4. Differential pressure sensor as per Claim 2, where the first hydraulic equalization path (16) comprises a channel in the hydraulic body (1).

5. Differential pressure sensor as per one of the previous claims where the first hydraulic overload element (14) has a hydraulic capacity against overpressure from the direction of the first overload chamber, said capacity being at least equal to the hydraulic capacity of the overload membrane, and preferably at least two times, and most preferably at least four times the hydraulic capacity of the overload membrane in the rest position.

6. Differential pressure sensor as per one of the previous claims where the first hydraulic overload element (14) comprises a membrane which, in the rest position, is supported at least in part against overpressure from the side of the first hydraulic measuring path.

7. Differential pressure sensor as per Claim 2 and Claim 6, or a dependent claim, where, in addition to comprising a first at least partially curved membrane (14), the first hydraulic overload element also comprises a first annular membrane (18) which surrounds the first at least partially curved membrane, where the first annular membrane (18) is supported in the rest position against overpressure from the side of the first hydraulic measuring path (8, 8').

8. Differential pressure sensor as per Claim 2 and Claim 6, or a dependent claim, where a second membrane is arranged in parallel to the first at least partially curved membrane (14) and said second membrane is supported in the rest position against overpressure from the side of the first hydraulic measuring path.

9. Differential pressure sensor as per one of the previous claims, where a second hydraulic overload element (15) is also arranged between the second semi-chamber (3) and the second hydraulic measuring path (9, 9') with a snap-dome behavior against an overpressure on the side of the second hydraulic measuring path (9, 9') and a second hydraulic equalization path (17) running parallel to it.

## Revendications

1. Capteur de pression différentielle, comprenant :
un corps hydraulique (1), dans lequel est formée une chambre de surcharge avec une membrane de surcharge (13), laquelle divise la chambre de surcharge en une première demi-chambre (2) et en une deuxième demi-chambre (3), où
la première demi-chambre (2) communique avec un premier canal de mesure (8, 8'), qui s'étend entre un premier séparateur et un premier côté d'une cellule de mesure de pression différentielle, et la deuxième demi-chambre (2) communique avec un deuxième canal hydraulique (9, 9'), qui s'étend entre un deuxième séparateur et un deuxième côté de la cellule de mesure de pression, **caractérisé en ce**
**qu'**entre au moins la première demi-chambre (2) et le premier canal de mesure hydraulique est disposé un premier élément de surcharge (14) hydraulique, avec un comportement de disque cloquant, contre une surpression sur le côté du premier canal de mesure hydraulique (8, 8') et un premier canal de compensation (16) hydraulique, s'étendant parallèlement au canal de mesure (8),
pour lequel la résistance hydraulique du premier canal de compensation (16) hydraulique est supérieure à la résistance du premier canal de mesure (8, 8') hydraulique.

2. Capteur de pression différentielle selon la revendication 1, pour lequel l'élément de surcharge (14) hydraulique comprend une première membrane au moins partiellement bombée.

3. Capteur de pression différentielle selon la revendication 2, pour lequel le premier canal de compensation (16) présente un passage dans une membrane.

4. Capteur de pression différentielle selon la revendication 2, pour lequel le premier canal de compensation (16) comprend un canal dans le corps hydraulique (1).

5. Capteur de pression différentielle selon l'une des revendications précédentes, pour lequel le premier élément de surcharge (14) hydraulique présente, contre la surpression provenant de la première chambre de surcharge, une capacité hydraulique, qui est au minimum égale à la capacité hydraulique de la membrane de surcharge et de préférence égale au double et particulièrement de préférence égale au quadruple de la capacité hydraulique de la membrane de surcharge, en position de repos.

6. Capteur de pression différentielle selon l'une des revendications précédentes, pour lequel le premier élément de surcharge (14) hydraulique comprend une membrane au moins partiellement supportée, dans la position de repos, contre la surpression provenant du côté du premier canal de mesure hydraulique.

7. Capteur de pression différentielle selon la revendication 2 et la revendication 6 ou l'une des revendications en dépendant, pour lequel le premier élément de surcharge hydraulique, outre une première membrane (14) au moins partiellement bombée, comprend une première membrane (18) annulaire, qui entoure la première membrane au moins partiellement bombée, la première membrane (18) annulaire étant supportée en position de repos, contre la surpression provenant du côté du premier canal de mesure hydraulique (8, 8').

8. Capteur de pression différentielle selon la revendication 2 et la revendication 6 ou l'une des revendications en dépendant, pour lequel est disposée, parallèlement à la première membrane (14) au moins partiellement bombée, une deuxième membrane, qui est supportée en position de repos, contre la surpression provenant du côté du premier canal de mesure hydraulique.

9. Capteur de pression différentielle selon l'une des revendications précédentes, pour lequel, par ailleurs, est disposé entre la deuxième demi-chambre (3) et le deuxième canal de mesure hydraulique (9, 9') un deuxième élément de surcharge hydraulique (15) avec un comportement de disque cloquant contre une surpression sur le côté du deuxième canal de mesure hydraulique (9, 9') et un deuxième canal de compensation (17) hydraulique, s'étendant parallèlement au canal de mesure (9).
